# EUROPÄISCHE PATENTANMELDUNG

(11) **EP 1 048 550 A2**
(43) Veröffentlichungstag der Anmeldung: **02.11.2000**
(21) Anmeldenummer: 00108307.0
(22) Anmeldetag: 15.04.2000
(51) Int. Cl.: B62D 13/04, B62D 13/06

(54) **Lenksystem und Erntebergungsmaschine**

(30) Priorität: 28.04.1999 DE 19919321
(71) Anmelder: DEERE & COMPANY, Moline, Illinois 61265-8098 (US)
(72) Erfinder: Viaud, Jean, 70100 Gray (FR); Gunther, Daniel, 57600 Morsbach (FR); Bestmann, Herrmann, 24640 Schmalfeld (DE)
(74) Vertreter: Magin, Ludwig Bernhard

(57) **Zusammenfassung**

An Zugfahrzeugen, vorzugsweise an landwirtschaftlichen Arbeitsfahrzeugen, wie beispielsweise an durch Ackerschlepper gezogenen Gespannteilen bzw. Anhängern oder Geräten, werden oftmals Hilfs- bzw. Zwangslenkungssysteme eingesetzt, bei denen ein hydraulischer Geberzylinder einen Winkel zwischen dem Zugfahrzeug und dem Gespannteil erfaßt und über einen Nehmerzylinder in einen Einschlagwinkel einer oder mehrerer Achsen bzw. Räder des Anhängers umsetzt. Die Anordnung ist dabei so gestaltet, daß der Einschlagwinkel der Achsen bzw. Räder des Anhängers der Stellung des Zugfahrzeugs zu dem Anhänger entspricht.

Es wird ein Lenksystem für wenigstens ein Rad (22) eines gezogenen Gespannteils (14, 14') vorgeschlagen, durch das das Rad (22) unabhängig von einer Zwangslenkung in eine vorzugsweise nicht ausgelenkte Stellung gebracht werden kann. Darüber hinaus wird eine Erntebergungsmaschine mit einem solchen Lenksystem vorgeschlagen.

Lenksysteme und Erntebergungsmaschinen werden vorzugsweise in der Landwirtschaft eingesetzt.

## Beschreibung

Die Erfindung betrifft ein Lenksystem eines gezogenen Gespannteils mit wenigstens einem ersten Sensor, dessen Sensorausgabewert zumindest von der Relativstellung des Gespannteils zu dem Zugfahrzeug abhängig ist, mit wenigstens einem Stellmittel zur Verstellung wenigstens eines Rades des gezogenen Gespannteils in Abhängigkeit von dem Sensorausgabewert sowie mit wenigstens einem Steuermittel, durch das die Stellung des Rades unabhängig von dem Sensorausgabewert veränderbar ist, und eine Erntebergungsmaschine mit einem solchen Lenksystem.

Die DE-A1-39 19 561 zeigt eine Anhängerzwangslenkung für land- und forstwirtschaftliche Nutzfahrzeuge. Die Lenkung des Anhängers erfolgt über eine Hydraulikzylinderkombination, die einen ersten doppeltwirkenden Geberzylinder, der einenends mit einem Zugfahrzeug und andernends mit dem Anhänger verbunden ist, sowie einen zweiten doppeltwirkenden Nehmerzylinder aufweist, der einenends mit dem Anhänger und andernends mit einer Achse des Anhängers verbunden ist. Lenkvorgänge des Zugfahrzeugs führen zu einer Verschiebung des Geberzylinders, der über Leitungen mit dem Nehmerzylinder verbunden ist, und zu einer Bewegung des Nehmerzylinders und somit zu einem Einschlagen der Achse. Bei dieser Art der Anhängerzwangslenkung ist es nicht möglich, das Gespann problemlos zurückzusetzen.

Die EP-A1-0 710 601 zeigt eine Steuerung für die Hinterräder eines an ein Zugfahrzeug anhängbaren Fahrzeugs wie eines Auflegers oder Anhängers. Die Steuerung weist einen ersten doppeltwirkenden Hydraulikzylinder auf, dessen Position von der Stellung der Längsachsen des Zugfahrzeugs und des Anhängers bzw. Auflegers abhängt und der auf einen zweiten doppeltwirkenden Hydraulikzylinder wirkt, der der Auslenkung der lenkbaren Räder des Anhängers bzw. Auflegers dient. Die Steuerung weist eine Zentriereinrichtung auf, durch die die Achse, auf der die Räder angebracht sind, in eine Mittelstellung bzw. Geradeausstellung gebracht und arretiert werden kann. Hierzu dient ein Ausgleichszylinder, der mit einer Pneumatikdruckquelle verbindbar ist. Der Ausgleichszylinder ist mit zwei wippenartig ausgebildeten Hebeln verbunden, deren dem Ausgleichszylinder abgewandte Enden als Anschläge für an der Achse vorgesehene Platten dienen. Wird der Ausgleichszylinder mit Druck beaufschlagt, bringt er die Räder über die an den Platten anschlagenden Hebelenden in eine nicht eingeschlagene Mittelstellung.

Das der Erfindung zugrunde liegende Problem wird in der nicht optimalen Funktionsweise und dem komplizierten Aufbau bekannter Lenksysteme für gezogene Gespannteile und in der nicht optimalen Funktionsweise von Erntebergungsmaschinen, die mit solchen Lenksystemen ausgestattet sind, gesehen.

Dieses Problem wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Auf diese Weise wird eine Zusatzverstellung des wenigstens einen Rades des gezogenen Gespannteils ermöglicht, ohne daß an dem Zugfahrzeug oder an dem Gespannteil zusätzliche Bauelemente notwendig sind. Das Rad kann durch das Steuermittel beispielsweise für bestimmte Einsatzbedingungen, wie beispielsweise zum Zurücksetzen des Gespanns, in eine nicht ausgelenkte Stellung oder in andere, eventuell beliebig wählbare Stellungen gebracht werden, ohne daß hierzu der Lenkwinkel des Gespanns bzw. die Stellung des Zugfahrzeugs zu dem gezogenem Gespannteil verändert werden muß. Der Sensor und das Stellmittel sind vorzugsweise Bestandteile einer Zwangslenkung, die bewirkt, daß der gezogene Gespannteil dem Zugfahrzeug folgt. Das Steuermittel ist vorgesehen, um die Stellung wenigstens eines Rades des gezogenen Gespannteils unabhängig von der Stellung des Zugfahrzeugs und des Gespannteils beeinflussen zu können. Unter einem Gespann ist eine Kombination aus einem Zugfahrzeug und einem an dieses angehängten bzw. durch dieses gezogenen Gespannteil zu verstehen. Das Gespann kann beispielsweise aus einem Ackerschlepper oder einem anderen landwirtschaftlichen Arbeitsfahrzeug und einem gezogenen bzw. angehängten Transportanhänger oder einem Gerät wie einem Aufsattelpflug, einer Ballenpresse, einem Ballenwickelgerät oder einem anderen landwirtschaftlichen Gerät bestehen. Es ist aber auch der Einsatz eines solchen Lenksystems an einem Lastkraftwagen mit Anhänger oder Auflieger oder an anderen industriellen, bauwirtschaftlichen oder forstwirtschaftlichen Fahrzeugen bzw. an solchen Gespannen denkbar.

Der Sensor und das Steilmittel wirken allgemein wie ein Geber und ein Nehmer. Der Sensor kann beispielsweise als elektrischer Positionsaufnehmer, optischer Sensor oder auch als Ultraschall-Sensor und das Stellmittel als Stellmotor ausgebildet sein. Vorzugsweise sind der Sensor und/oder das Stellmittel aber als Hydraulikmotoren ausgeführt. Diese sind vorzugsweise doppeltwirkend, um die Verstellmöglichkeiten des Sensors und/oder des Stellmittels zu verbessern.

An Zugfahrzeugen und auch an gezogenen Gespannteilen ist oftmals eine Hydraulikdruckquelle beispielsweise zur Betätigung von Anbaugeräten oder von fahrzeugeigenen Funktionen vorgesehen. Das Steuermittel kann als Stellmotor beispielsweise als elektrischer Stellmotor ausgeführt sein. Ist das Steuermittel als doppeltwirkender Hydraulikmotor ausgeführt, so kann er von dieser Hydraulikdruckquelle mit Hydraulikdruck beaufschlagt werden. Sollte an dem Gespann keine Hydraulikdruckquelle vorgesehen sein, so kann die Betätigung des Steuermittels auch über eine speziell hierfür vorgesehene Hydraulikdruckquelle erfolgen. Es ist auch eine pneumatische Betätigung vorstellbar.

Weist das als doppeltwirkender Hydraulikmotor ausgeführte Steilmittel einen Zylinder und einen Kolben auf, so kann das Steuermittel zur Beeinflussung des Stellmittels an dem Zylinder oder an dem Kolben angreifen. Bei einer Beeinflussung des Stellmittels durch das Steuermittel können der Zylinder und der Kolben ihre relative Stellungen zueinander beibehalten, wodurch das Stellmittel in der Art eines einteiligen Bauteils wirkt. Es ist aber auch denkbar, das Steilmittel bzw. die Stellung von Kolben und Zylinder zueinander zu verändern, indem das Stellmittel beispielsweise durch eine Hydraulikdruckquelle oder einen weiteren Hydraulikmotor mit Druck beaufschlagt wird.

Es ist denkbar, das Stellmittel, den Sensor und das Steuermittel an unterschiedlichen Positionen an dem Zugfahrzeug oder dem gezogenen Gespannteil vorzusehen. Besonders vorteilhaft ist es aber, wenn das Stellmittel und/oder das Steuermittel und/oder der Sensor an dem gezogenen Gespannteil vorgesehen sind, so daß diese zusammen mit dem gezogenen Gespannteil an das Zugfahrzeug angehängt bzw. angeschlossen werden können.

Das Stellmittel kann an dem Gespannteil so vorgesehen werden, daß es vorzugsweise in seiner Längsrichtung als Ganzes verschiebbar ist. Wird das Stellmittel durch das Steuermittel dadurch beeinflußt, daß das Steuermittel an dem Kolben des als Hydraulikmotor ausgeführten Stellmittels angreift, so wird das Stellmittel in der Art eines einteilig ausgeführten Bauteils wie beispielsweise einer Stange, verschoben, da die relative Lage des Kolbens und des Zylinders durch den Sensor vorgegeben werden.

Das Stellmittel kann über übliche verschiebbare Anordnungen, beispielsweise in der Art von Schienenführungen an dem Gespannteil angeschlossen sein. Um ein Verkanten zu vermeiden, kann eine Führung vorgesehen werden, die einen verschieblich auf einem Mehrkantprofil, das beispielsweise in der Art eines Zapfwellenprofils ausgeführt sein kann, angeordneten Halter aufweist. Es ist auch denkbar, daß der Halter fest an dem Gespannteil angeordnet ist und das Mehrkantprofil bezogen auf den Halter verschoben werden kann.

Der Sensor kann als doppeltwirkender Hydraulikzylinder ausgeführt sein, der einenends an dem Zugfahrzeug und andernends an dem gezogenen Gespannteil anlenkbar ist, und kann sowohl mit seiner Kolbenseite als auch mit seiner Druckseite mit jeweils einer Seite des als Hydraulikmotor ausgeführten Stellmittels in Verbindung stehen. Es ergibt sich so eine Zwangslenkung des gezogenen Gespannteils in Abhängigkeit von dem Lenkwinkel, ohne das hierzu eine zusätzliche Energiequelle erforderlich ist.

Um die jeweilige Stellung des Stellmittels und/oder des Rades und/oder des Steuermittels zu bestimmen, kann das Lenksystem wenigstens einen Positionssensor aufweisen.

Es ist möglich, das Steuermittel manuell zu betätigen. Vorzugsweise weist das Lenksystem aber eine Steuereinheit oder Regeleinheit auf, die die Stellung des Stellmittels und/oder des Rades und/oder des Steuermittels in Abhängigkeit von Daten ermittelt, die von den Positionssensoren gelieferten werden. Die Steuer- oder Regeleinheit kann in der Art einer elektrischen oder elektronischen Schaltung ausgeführt sein. Vorzugsweise wird die erforderliche Schaltlogik aber in einen Mikroprozessor implementiert. Die Steuer- oder Regeleinheit kann die Stellung des Stellmittels anhand von Ausgabewerten von Sensoren, wie beispielsweise des Positionssensors, ermitteln. Die Sensoren können beispielsweise als elektrische Stellungsgeber in der Art von Positions-Melde-Kontakten oder analogen Positionsmessern ausgeführt sein, die beispielsweise bei der Verwendung von Hydraulikmotoren die Stellung eines Kolbens in einem Zylinder bestimmen können. Die Steuereinheit kann diese Daten verarbeiten und ein Ausgangssignal liefern, das auf das Steuermittel wirkt.

Die Steuer- oder Regeleinheit steuert ein Ventil, beispielsweise ein elektro-hydraulisches Magnetventil an, über das das vorzugsweise als Hydraulikmotor ausgeführte Steuermittel mit Druck beaufschlagbar ist.

Es ist vorteilhaft, Erntebergungsmaschinen mit einem erfindungsgemäßen Lenksystem zu versehen, um diese gerichtet zurücksetzen zu können oder um vor allem an den Radaufhängungen auftretende Belastungen zu verringern. Diese vorzugsweise als gezogene Gespannteile ausgebildeten Erntebergungsmaschinen können beispielsweise Ballenpressen oder Ballenwickelgeräte sein. Vorzugsweise handelt es sich um längenveränderbare Erntemaschinen, beispielsweise um Kombinationen von Ballenpressen mit Ballenwickelgeräten, bei denen nach erfolgtem Preßvorgang ein Ballen auf einem der Presse nachgeordneten Ballenwickelgerät in Folie oder andere Materialien gewickelt wird. Ein erfindungsgemäßes Lenksystem ermöglicht es bei einem solchen Gerät die Baulänge während des Betriebs auch dann verändern zu können, wenn das Gespann in einer Kurve steht und das Rad oder die Räder des Gerätes ausgelenkt sind, ohne das auf das Rad oder die Räder bzw. auf das Gerät selbst während des Verstellens zusätzliche Belastungen ausgewirkt werden. Das Rad ist dabei vorzugsweise an einem ausfahrbaren Teil des Gespannteils angeordnet. Es ist auch denkbar, ein erfindungsgemäßes Lenksystem an Aufliegern oder an bau- oder forstwirtschaftlichen Fahrzeugen wie Anhängern zum Langholztransport u.a. einzusetzen.

In der Zeichnung wird nachfolgend ein näher beschriebenes Ausführungsbeispiel der Erfindung mit zwei verschiedenen Verwendungen dargestellt. Es zeigt:
- Fig. 1: eine schematische Darstellung eines Zugfahrzeugs und eines von diesem gezogenen Gespannteils mit einem erfindungsgemäßen Lenksystem zur Steuerung eines Rades des Gespannteils,
- Fig. 2: eine schematische Darstellung eines längenveränderbaren bzw. ausfahrbaren, gezogenen Gespannteils in einer eingefahrenen Stellung,
- Fig. 3: den Gespannteil aus Fig. 2 in einer Kurve vor Beginn des Ausfahrens,
- Fig. 4: den Gespannteil aus Fig. 3 nach Beendigung des Ausfahrens und
- Fig. 5: einen skizzierten Schaltplan für das erfindungsgemäße Lenksystem.

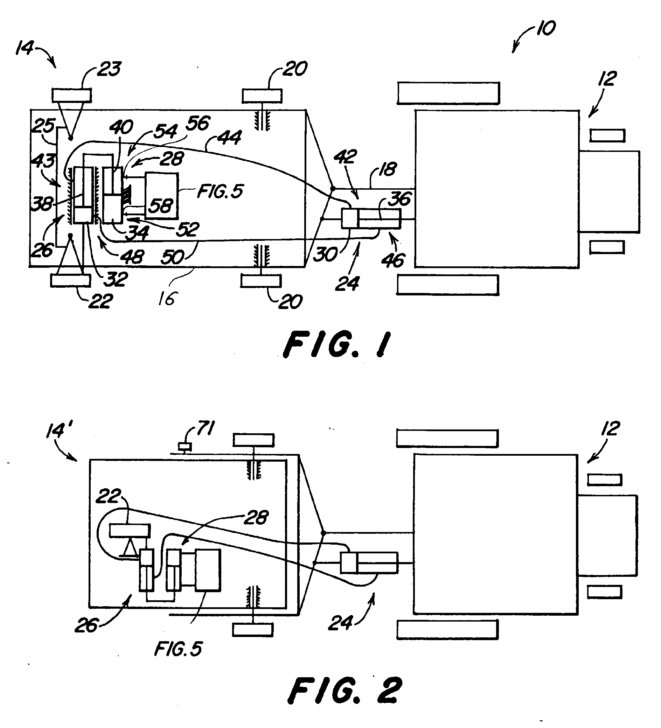

Ein in Fig. 1 gezeigtes Gespann 10 weist ein Zugfahrzeug 12 in der Art eines landwirtschaftlichen Arbeitsfahrzeugs wie beispielsweise eines Ackerschleppers und einen von diesem gezogenen Gespannanhänger bzw. Gespannteil 14 auf.

Der Gespannteil 14 weist einen Rahmen 16, eine als Deichsel ausgeführte Anhängevorrichtung 18, zwei auf einer nicht gezeigten Achse drehbar angeordnete Vorderräder 20 sowie ein lenkbar an dem Rahmen 16 über eine Aufhängung angebrachtes rückwärtiges Rad 22 sowie ein zweites Rad 23 auf, das mit der Aufhängung des ersten Rads 22 über einen nur andeutungsweise gezeigten Lenkhebel 25 so verbunden ist, daß die Stellung des zweiten Rades 23 durch die Stellung des Rades 22 vorgegeben wird. Darüber hinaus weist das Fahrzeuggespann 10 ein Lenksystem zur Lenkung des Rades 22 auf.

Das Lenksystem umfaßt einen Sensor 24, ein Stellmittel 26 und ein Steuermittel 28, die als doppeltwirkende Hydraulikmotoren ausgebildet sind und die jeweils einen Zylinder, 30, 32, 34 und einen in diesem angeordneten Kolben 36, 38, 40 aufweisen.

Der Sensor 24 ist einenende lösbar mittels üblicher Befestigungsmittel an dem Zugfahrzeug 12 und andernends in ebensolcher Weise an dem Gespannteil 14 parallel zu der Anhängevorrichtung 18 angelenkt.

Sowohl das Stellmittel 26 als auch das Steuermittel 28 sind an dem Gespannteil 14 angeordnet. Das Steuermittel 28 ist an dem gezogenen Gespannteil 14 mit seinem Zylinder 34 in üblicher Weise befestigt. Das Stellmittel 26 ist mit seinem Zylinder 32 an dem gezogenen Gespannteil 14 über eine nicht gezeigte verschiebbare Führung so angebracht, daß das Stellmittel 26 in Richtung seiner Längserstreckung gegenüber dem Gespannteil 14 verschoben werden kann, wenn die Stellung des Kolbens 38 in dem Zylinder 32 festgelegt ist, wie es im folgenden näher beschrieben wird.

Der Kolben 40 des Steuermittels 28 ist mit dem Kolben 38 des Stellmittels 26 fest verbunden, so daß sich die beiden Kolben 38, 40 nur gemeinsam bewegen können. Der Zylinder 32 des Stellmittels 26 wiederum greift über nicht gezeigte Verbindungselemente an der Aufhängung des Rades 22 an.

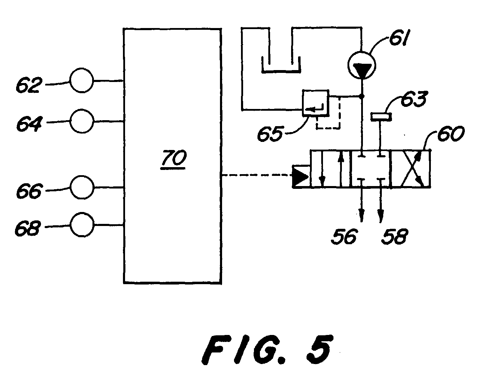

Der kolbenseitige Bereich 42 des Sensors 24 ist mit dem, dem Kolben 36 abgewandten Bereich 43 des Stellmitteis 26 über eine Leitung 44 verbunden. Der dem Kolben 38 abgewandte Bereich 46 des Sensors 24 ist mit dem kolbenseitigen Bereich 48 des Stellmittels 26 über eine zweite Leitung 50 verbunden. Der Kolben 40 des Steuermittels 28 ist mit dem Kolben 38 des Stellmittels 26 wirksam verbunden. Das Steuermittel 28 weist sowohl in seinem kolbenseitigen Bereich 52 als auch in seinem dem Kolben abgewandten Bereich 54 Anschlüsse 56, 58 für nicht gezeigte hydraulische Steuerleitungen auf, die über ein in Fig. 5 gezeigtes Magnetventil 60 mit einer schematisch gezeigten Hydraulikdruckquelle 61, die beispielsweise bereits an dem Zugfahrzeug 12 vorgesehen sein kann, verbindbar sind.

Wie es in Fig. 5 gezeigt wird, umfaßt das Lenksystem drei Positionssensoren bzw. Radstellungssensoren 62, 64, 66 sowie einen vierten positionssensor bzw. Steuermittelsensor 68. Sowohl die Radstellungssensoren 62, 64, 66 als auch der Steuermittelsensor 68 sind mit einer Steuereinheit 70 verbunden, die vorzugsweise an dem Zugfahrzeug 12 angeordnet ist und die die von den Positionssensoren 62, 64, 66, 68 gelieferten Werte verarbeitet und in Abhängigkeit von diesen Werten die Stellung des Magnetventils 60 bestimmt, das in dem vorliegenden Ausführungsbeispiel als 3/2 Wegeventil ausgeführt ist. Die Anschlüsse 56, 58 können durch das Magnetventil 60 über die nicht gezeigten Steuerleitungen mit der Hydraulikdruckquelle 61 und mit einem Druckmittelreservoir 63 verbunden werden. Zwischen der Hydraulikdruckquelle 61 und dem Magnetventil 60 ist ein Druckbegrenzungsventil 65 vorgesehen. Der erste Radstellungssensor 62 ermittelt, ob sich das Rad 22 in Geradeaus-Stellung befindet. Der zweite und der dritte Radstellungssensor 64, 66 ermitteln die jeweilige Auslenkrichtung des Rades 22. Anstelle der Radstellungssensoren 62, 64, 66 könnte auch ein Drehpotentiometer zur Aufnahme der Stellung des Rades 22 vorgesehen sein. Der Steuermittelsensor 68 ermittelt, ob sich das Steuermittel 68 in seiner Neutralstellung befindet.

Im folgenden wird nun die Funktionsweise des beschriebenen Lenksystems dargestellt.

Im normalen Fahrbetrieb, wenn der Gespannteil 14 an das Zugfahrzeug 12 angehängt ist und der durch das Zugfahrzeug 12 vorgegebenen Fahrtrichtung folgt, ist die Steuereinheit 70 nicht aktiviert und es wird über das Magnetventil 60 kein Steuerdruck auf das Steuermittel 28 gegeben, das sich in seiner vorzugsweise mittleren Neutralstellung befindet.

Das Lenksystem wirkt dann wie eine bekannte Zwangslenkung. Der zwischen Zugfahrzeug 12 und Gespannteil 14 angeordnete Sensor 24 nimmt den zwischen der nicht dargestellten Längsachse des Zugfahrzeugs und der ebenfalls nicht dargestellten Längsachse des Gespannteils 14 auftretenden Einschlagwinkel auf. In Abhängigkeit von diesem Einschlagwinkel liefert er einen Ausgabewert, d.h. eine der Leitungen 44, 50 wird durch den sich in dem Zylinder 30 verschiebenden Kolben 36 mit Druck beaufschlagt, wodurch einer der Bereiche 44, 46 des Stellmittels 26 mit Druck beaufschlagt wird. Dadurch wird die Stellung des Zylinders 32 des Stellmittels 26 bezogen auf dessen Kolben 38 verändert und das mit dem Zylinder 32 des Stellmittels 26 verbundene Rad 22 entsprechend eingeschlagen. Das Steuermittel 28 befindet sich in seiner vorzugsweise mittleren Neutralstellung und hält den Kolben 38 des Stellmittels 26 durch die Verbindung der Kolben 38, 40 in einer bezogen auf den gezogenen Gespannteil 14 festgelegten Position.

Soll nun das Rad 22 in eine Geradeaus-Stellung gebracht werden, beispielsweise um das Gespann zurückzusetzen, wird die Steuereinheit 70 aktiviert. Dies kann manuell beispielsweise über eine in dem Zugfahrzeug vorgesehene Betätigungseinrichtung oder automatisch in Abhängigkeit von dem Betriebszustand, beispielsweise von der gewählten Fahrtrichtung des Gespanns 10 erfolgen. Über die Ausgabewerte der Radstellungssensoren 62, 64, 66 wird die momentane Stellung des Rades 22 und durch den Steuermittelsensor 68 die Stellung des Steuermittels 28 durch die Steuereinheit 70 aufgenommen. Über das durch die Steuereinheit 70 angesteuerte Magnetventil 60 wird abhängig von der ermittelten Auslenkrichtung des Rades 22 einer der Anschlüsse 56, 58 des Steuermittels 28 mit Druck beaufschlagt. Dadurch verschiebt sich der Kolben 40 des Steuermittels 28 in dem an dem Gespannteil 14 fest angebrachten Zylinder 34. Der Kolben 40 ist fest mit dem Kolben 38 des Steuermittels 26 verbunden. Da der Kolben 38 des Stellmittels 26 durch die durch den Sensor 24 auf das Stellmittel 26 ausgeübten Druckverhältnisse in einer vorbestimmten Stellung gehalten wird, wird durch eine Bewegung des Kolbens 40 des Steuermittels 28 das Stellmittel 26 im ganzen entlang seiner nicht gezeigten Führung verschoben. Der Vorgang wird durch die Steuereinheit 70 beendet, wenn der erste Radstellungssensor 62 aufnimmt, daß sich das Rad 22 in Geradeaus-Stellung befindet.

In den Figuren 2 bis 5 wird eine alternative Ausführung mit einem abweichend ausgeführten Gespannteil 14' gezeigt. Die Bezeichnung und Numerierung der übrigen Bestandteile wird beibehalten, da diese im wesentlichen den Bestandteilen des ersten Ausführungsbeispiels entsprechen.

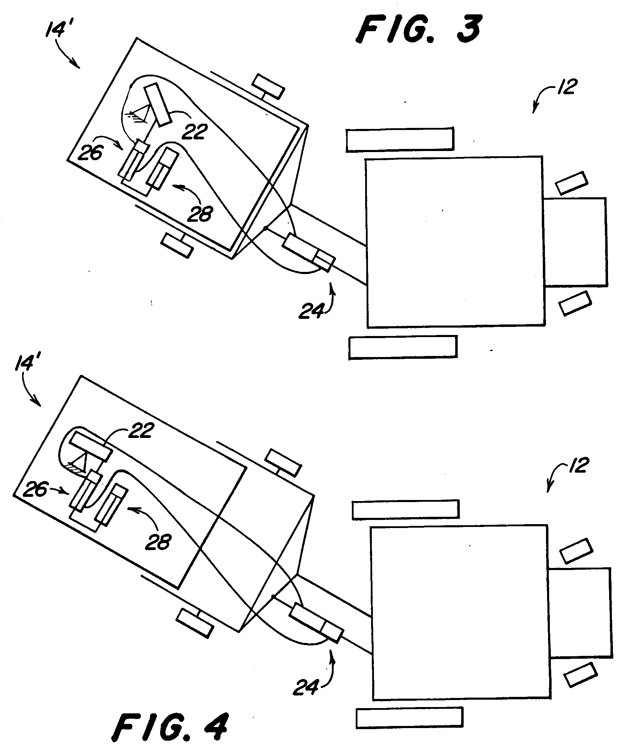

Der Gespannteil 14' ist längenveränderlich ausgeführt. Es kann sich hierbei beispielsweise um ein mit einer Presse kombiniertes Ballenwickelgerät handeln. Soll die Baulänge des Gespannteile 14' verändert werden, wenn das Gespann in einer Kurven-Stellung steht, d.h. wenn zwischen den Längsachsen des Zugfahrzeugs 12 und des gezogenen Gespannteils 14' ein Lenkwinkel auftritt und das Rad 22 eingeschlagen ist, so wird die Steuereinheit 70 manuell oder automatisch, beispielsweise in Abhängigkeit von dem Betriebszustand des Gespannteils 14' aktiviert, um das Rad 22 in Geradeaus-Stellung zu bringen, um Belastungen an Rädern und anderen Bestandteilen des Gespannteils 14' zu verringern. Dies wird in den Fig. 3 und 4 verdeutlicht. In Fig. 3 wird das Gespann 10 in einer Stellung gezeigt, die es während einer Kurvenfahrt einnimmt. Das Rad 22 befindet sich durch das Zusammenwirken des Sensors 24 und des Stellmittels 26 in einer so ausgelenkten Stellung, daß es der Kurvenfahrt das Zugfahrzeugs 12 folgt. Das Steuermittel 28 befindet sich in seiner neutralen Stellung und beeinflußt das Lenkverhalten nicht.

Soll die Länge des gezogenen Gespannteils 14 verändert werden, wenn sich das Gespann 10 in einer Kurven-Stellung befindet, so steuert die Steuereinheit 70 das Magnetventil 60 derart an, daß entweder der Anschluß 56 oder der Anschluß 58 durch die Hydraulikdruckquelle 61 mit Druck beaufschlagt wird. Dadurch verschiebt sich der Kolben 40 des Steuermittels 28 in dessen Zylinder 34, wodurch sich das Stellmittel 26 entlang seiner nicht gezeigten Führung als Ganzes verschiebt. Wenn der Radstellungssensor 62 erkennt, daß sich das Rad 22 in seiner Neutralstellung befindet, liefert er ein Signal an die Steuereinheit 70, die daraufhin das Magnetventil 60 in seine Sperrstellung bringt, in der die Anschlüsse 56, 58 weder mit der Hydraulikdruckquelle 61 noch mit dem Reservoir 63 verbunden sind.

Die Steuereinheit 70 kann vor dem Verstellen des Rades 22 zusätzlich zu den Ausgabewerten der Radstellungssensoren 62, 64 und 66 den Ausgabewert des Steuermittelsensors 68 aufnehmen, der die Position des Kolbens 40 des Steuermittels 28 wiedergibt, und diesen speichern. Nach Abschluß der Längenveränderung und Rückführung des Gespannteils 14' in die Ausgangsposition beaufschlagt die Steuereinheit 70 das Steuermittel 28 solange mit Druck bis der Steuermittelsensor 68 wieder einen entsprechenden Ausgabewert liefert und sich der Kolben 40 wieder in der gleichen Stellung wie vor der Längenveränderung befindet. Es ist auch denkbar, daß der Ausgabewert durch die Steuereinheit 70 so verarbeitet wird, daß diese nach einer Verlängerung des Gespannteils 14' das Steuermittel 28 derart über das Magnetventil 60 mit Druck beaufschlagt, daß die Stellung des Rades 22 der aktuellen Relativstellung des Gespanns 10 entspricht. Die Ausfahrstellung des gezogenen Gespannteils 14 kann beispielsweise durch einen zusätzlichen Ausfahrsensor 71, der an dem Gespannteil 14' angeordnet ist, aufgenommen werden. Auch die durch den Ausfahrsensor 71 aufgenommenen Daten können durch die Steuereinheit 70 verarbeitet und dazu genutzt werden, eine automatische Ansteuerung des Steuermittels 28 durch die Steuereinheit 70 bei einer Längenveränderung des Gespannteils 14' in Abhängigkeit von der Stellung des Rades 22 und des Ausfahrsensors 71 zu bewirken. Nach Abschluß des Vorgangs ergibt sich die Auslenkung des Rades 22 dann wieder aus der Zwangslenkung durch den auf das Stellmittel 26 und damit auf das Rad 22 wirkenden Sensor 24. Diese Rückstellung des Steuermittels 28 und damit des Rades 22 kann sowohl bei dem ersten als auch dem zweiten Ausführungsbeispiel eingesetzt werden.

## Patentansprüche

1. Lenksystem eines gezogenen Gespannteils (14, 14'), mit wenigstens einem ersten Sensor (24), dessen Sensorausgabewert zumindest von der Relativstellung des Gespannteils (14, 14') zu dem Zugfahrzeug (12) abhängig ist, mit wenigstens einem Stellmittel (26) zur Verstellung wenigstens eines Rades (22) des gezogenen Gespannteils (14, 14') in Abhängigkeit von dem Sensorausgabewert sowie mit wenigstens einem Steuermittel (28), durch das die Stellung des Rades (22) unabhängig von dem Sensorausgabewert veränderbar ist, dadurch gekennzeichnet, daß das Steuermittel (28) auf das Stellmittel (26) wirkt.

2. Lenksystem nach Anspruch 1, dadurch gekennzeichnet, daß der Sensor (24) und/oder das Stellmittel (26) als vorzugsweise doppeltwirkende Hydraulikmotoren ausgebildet sind.

3. Lenksystem nach Anspruch 1 oder 2, dadurch gekennzeichnet, daß das Steuermittel (28) als Stellmotor, vorzugsweise als ein doppeltwirkender Hydraulikmotor, ausgebildet ist.

4. Lenksystem nach einem oder mehreren der vorherigen Ansprüche, dadurch gekennzeichnet, daß das Stellmittel (26) als ein doppeltwirkender Hydraulikmotor mit einem Zylinder (32) und einem Kolben (38) ausgeführt ist, und daß das Steuermittel (28) an dem Zylinder (32) oder an dem Kolben (38) angreift.

5. Lenksystem nach einem oder mehreren der vorherigen Ansprüche, dadurch gekennzeichnet, daß das Stellmittel (26) und/oder das Steuermittel (28) und/oder der Sensor (24) an dem gezogenen Gespannteil (14, 14') vorgesehen sind.

6. Lenksystem nach Anspruch 5, dadurch gekennzeichnet, daß das Stellmittel (26) an dem gezogenen Gespannteil (14, 14') derart anbringbar ist, daß es als Ganzes in Richtung seiner Längserstreckung verschiebbar ist.

7. Lenksystem nach einem oder mehreren der vorherigen Ansprüche, dadurch gekennzeichnet, daß der Sensor (24) als ein doppeltwirkender Hydraulikmotor ausgeführt ist, der einenends an dem Zugfahrzeug (12) und andernends an dem gezogenen Gespannteil (14, 14') anlenkbar ist und sowohl mit seinem kolbenseitigen Bereich (42) als auch mit seinem dem Kolben (36) abgewandten Bereich (46) mit jeweils einem Bereich (43, 48) des als Hydraulikmotor ausgeführten Stellmittels (26) über Leitungen (44, 50) in Verbindung steht.

8. Lenksystem nach einem oder mehreren der vorherigen Ansprüche, gekennzeichnet durch wenigstens einen Positionssensor (62, 64, 66, 68) zur Ermittlung der Stellung des Rades (22) und/oder des Stellmittels (26) und/oder des Steuermittels (28).

9. Lenksystem nach Anspruch 8, gekennzeichnet durch eine Steuereinheit oder Regeleinheit (70), die die von dem Positionssensor oder den Positionssensoren (62, 64, 66, 68) gelieferten Daten verarbeitet und ein Ausgangssignal liefert, das auf das Steuermittel (28) wirkt.

10. Lenksystem nach Anspruch 9, dadurch gekennzeichnet, daß die Steuereinheit (70) ein Ventil, vorzugsweise ein Magnetventil (60), ansteuert, über das das als Hydraulikmotor ausgeführte Steuermittel (28) mit Druck beaufschlagt werden kann.

11. Erntebergungsmaschine, vorzugsweise in der Art eines längenveränderbaren gezogenen Gespannteils (14, 14') wie beispielsweise einem Ballenwickelgerät, mit einem Lenksystem nach einem oder mehreren der vorherigen Ansprüche, wobei das Rad (22) vorzugsweise an einem ausfahrbaren Teil des gezogenen Gespannteils (14, 14') angeordnet ist.
